# NEUE EUROPÄISCHE PATENTSCHRIFT

(11) **EP 0 657 266 B2**
(45) Veröffentlichungstag und Bekanntmachung des Hinweises auf die Entscheidung über den Einspruch: **07.09.2005**
(45) Hinweis auf die Patenterteilung: 20.10.1999
(21) Anmeldenummer: 94118486.3
(22) Anmeldetag: 24.11.1994
(51) Int. Cl.: B29C 44/04

(54) **Verfahren und Vorrichtung zur Herstellung eines Formteils aus Kunststoffschaum**
Method and apparatus for the production of a plastic foam moulding
Procédé et appareil pour la production d'une pièce moulée en matière plastique mousse

(30) Priorität: 29.11.1993 AT 241693; 10.08.1994 AT 155694
(43) Veröffentlichungstag der Anmeldung: 14.06.1995
(73) Patentinhaber: C.A. GREINER & SÖHNE GESELLSCHAFT M.B.H., 4550 Kremsmünster (AT)
(72) Erfinder: Eder, Bernhard, A-4020 Linz (AT); Reitinger, Franz, A-4112 Rottenegg (AT); Sulzbach, Hans-Michael, Dipl.-Ing., D-53639 Königswinter/Vinxel (DE); Klahre, Horst, Dipl.-Ing., D-53753 Sankt Augustin (DE)
(74) Vertreter: Secklehner, Günter

(56) Entgegenhaltungen:
- EP-A- 0 350 807
- EP-A- 0 496 015
- CH-A- 668 033
- DE-A- 4 008 173
- FR-A- 1 484 844
- US-A- 3 354 578
- US-A- 4 243 625
- US-A- 4 685 872
- PATENT ABSTRACTS OF JAPAN vol. 005 no. 002 (M-049) ,9 January 1981 & JP-A-55 135626 (SEKI YOSHIHIKO) 22 October 1980,

## Beschreibung

Die Erfindung betrifft ein Verfahren zur Herstellung eines Formteiles sowie eine Vorrichtung zur Herstellung eines derartigen Formteiles.

Aus der DE 40 08 173 A, ist ein Formteil, insbesondere ein Verkleidungselement für Innenwände und/oder Türen eines Kraftfahrzeuges, bekannt. Der Formteil besteht dabei aus einem plattenartigen Formkörper und wird aus vorexpandierten und durch Dampf miteinander verschweißten Schaumstoffpartikeln erzeugt. Weiters weist der Formteil einen sich Ober die gesamte Wandstärke erstreckenden Abschnitt mit verringerter Dichte und vergrößertem Volumen auf. Kurz bevor der Expansionsvorgang des Schaumstoffes beendet ist, wird ein Teilbereich des Formteils durch Zusammendrücken der Schaumstoffpartikel mit einem Schieber verdichtet, um einen gewünschten Verdichtungsfaktor zu erzielen.

Weiters ist aus der EP 0 496 015 A1 eine Vorrichtung bekannt, bei der zwischen den Aufnahmebehältern für die Flocken und dem Formhohlraum ein Zwischenbehälter, der beispielsweise mit einer Wiegevorrichtung versehen sein kann, angeordnet ist.

Es ist bereits bekannt - gemäß EP 0 350 807 A1 - Formteile aus Schaumstoffplatten herzustellen. Diese Schaumstoffplatten bestehen aus Schaumstoffgranulaten aus einem weichen Schaumstoff mit einer Korngröße von 2 mm bis 20 mm und weiteren Füllstoffen, wie z.B. Korkgranulat, Gummigranulat, Kreide, Kalziumkarbonat, Hartpolyurethanabfällen oder thermoplastischen Kunststoffabfällen mit einer Korngröße von 2 mm bis 20 mm, die in einem aus Primärmaterial gebildeten Schaumstoff verteilt eingeschäumt sind. Zur Herstellung eines Formteiles aus einer derartigen Schaumstoffplatte werden die Zellstege und Zellwände des Kunststoffschaumes zwischen den einzelnen Flocken des Schaumstoffgranulates und/oder der Füllstoffe und natürlich auch die Zellstege und Zellwände der Schaumstoffgranulate und gegebenenfalls der Füllstoffe bleibend plastisch verformt. Die Verformung der Schaumstoffplatten zu diesen Formteilen erfolgt durch Einwirkung von Hitze und Druck auf die Schaumstoffplatten, die nach Herstellung eines Schaumstoffblockes durch Zerschneiden desselben gewonnen werden. Bei derartigen Formteilen ist es schwierig, die Dichte bzw. Raumgewichte in den einzelnen Bereichen eines derartigen Formteiles auf gewünschte Werte einzustellen.

Der vorliegenden Erfindung liegt die Aufgabe zugrunde, ein Verfahren zur Herstellung eines Formteiles zu schaffen, der eine gleichmäßig dichte Füllung beim Einbringen der Materialien in den Formhohlraum ermöglicht, und der beliebige, unterschiedliche räumliche Ausgestaltungen und eine gezielte, universelle Anpassung der Dichteverhältnisse in den einzelnen Querschnittsbereichen des Formteiles ermöglicht. Weiters umfaßt die Erfindung eine Vorrichtung zur Herstellung eines solchen Formteiles.

Die Aufgabe dieser Erfindung wird durch die Merkmale des Anspruches 1 gelöst.

Durch das Einbringen der zur Herstellung des Formteiles benötigten Materialien, insbesondere der Flocken, aus den verschiedenen Kunststoffen oder Füllmaterialien, in einen geschlossenen Hohlraum kommt es zu einer gleichmäßig dichten Füllung aufgrund des Eintragens mit einem Luftstrom und der dadurch gleichmäßig dichten Einlagerung der Materialien, die in etwa auf dem Luftstrom schwimmend eingetragen werden. Dadurch weisen die Formteile über ihren gesamten Querschnittsbereich eine gleichmäßige Dichte auf. Daher ist es auch möglich, Formhohlräume mit unterschiedlichen räumlichen Ausgestaltungen bzw. unterschiedlichen Dicken, Breiten oder Längen mit einer gleichmäßigen Menge und damit mit einer etwa gleichbleibenden Dichte an Flocken bzw. Füllmaterialien zu füllen. Dadurch können Formteile mit über ihren gesamten Querschnitt annähernd gleichen Eigenschaften, z.B. Schalldämmeigenschaften oder Festigkeitswerten, erzielt werden, wie dies bisher bei der Einbringung in eine offene Form durch die beim Einschütten entstehenden, ungleichen Verlagerungen der Menge der Flocken und Füllmaterialien nicht immer möglich war. Weiters ist es möglich, ohne nachfolgende thermische Verformung oder sonstige Druck- und Temperaturbehandlung Formteile herzustellen, die, über ihren Querschnitt gesehen, mit unterschiedlich dichten bzw. festen Bereichen aus demselben Grundmaterial hergestellt sind. Dabei kann, auch bei Dichten die über das Einblasen beim Einbringen der Flocken und Füllmaterialien nicht mehr erzielbar sind, durch das Verdichten der noch unverbundenen bzw. losen Flocken und Füllmaterialien ein höheres Raumgewicht, gegebenenfalls auch über die gesamte Raumform des Formteiles, erzielt werden, und es wird dabei die Verbindungsstruktur der einzelnen Flocken und Füllmaterialien nicht nachteilig beeinflußt, da der Aufbau des die einzelnen Flocken und Füllmaterialien untereinander haltenden bzw. verbindenden Zellgerüstes erst in der bereits verdichteten, endgültigen Form erfolgt. Damit ist es möglich, höher beanspruchbare Formteile in einer festen Bindung auch mit einem derartigen Verfahren unter Anwendung solcher Flocken herzustellen.

Durch die Weiterbildung nach Anspruch 2 ist es auf vorteilhafte Weise möglich, Formteile herzustellen, bei welchen die Dichte in engen Grenzen eingehalten werden kann.

Durch das Vorgehen nach Anspruch 3 kann die Dichte des Raumgewichtes bzw. die Festigkeit einzelner Bereiche des Formteiles durch eine Erhöhung des Volumens beim Einbringen der Flocken bzw. Füllmaterialien in einfacher Weise bestimmt werden. Durch die Anordnung einer Vielzahl von verstellbaren Formflächen innerhalb eines Formhohlraumes ist es möglich, unterschiedlichst geformte Formteile einfach und rasch herzustellen.

Durch den Transport der Flocken und Füllmaterialien in einem Luftstrom gemäß Anspruch 4 ist ein gleichmäßig dichtes Füllen des Formhohlraumes mit Flocken bzw. Füllmaterialien möglich.

Vorteilhaft ist bei einem Verfahrensablauf nach Anspruch 5, daß dadurch eine beliebige Zusammensetzung zwischen Flocken und Füllmaterialien einfach erreicht werden kann und durch die exakte Festlegung der Füllmenge, bezogen auf den Formhohlraum, während der Füllung eine gewünschte, einheitliche Dicke und/oder Dichte erzielbar ist.

Vorteilhaft ist die Maßnahme nach Anspruch 6, da dabei durch eine entsprechende Abströmgeschwindigkeit des Gases bzw. der Luft, welche zur Förderung der Füllmaterialien benutzt wird, der Füllgrad bzw. Schwebezustand, in dem die Flocken bzw. Füllmaterialien in dem Gas bzw. der Luft gehalten werden, einfach eingestellt werden kann.

Durch die Maßnahme nach Anspruch 7 wird verhindert, daß die Lüftungsöffnungen, die gegebenenfalls beim Befüllen auch mit Teilen des Rohmaterials gefüllt werden, während des Reaktionsvorganges verkleben. Damit tritt sofort eine Selbstreinigung dieser Lüftungsöffnungen ein.

Vorteilhaft ist auch ein Vorgehen nach Anspruch 8, da dadurch die Wartungskosten und Herstellkosten der Form gering gehalten werden können.

Die Erfindung umfaßt weiters auch eine Vorrichtung zur Herstellung eines Formteiles.

Die Vorrichtung ist durch die Merkmale des Anspruches 9 gekennzeichet.

Diese Anlage dient zur Ausführung des erfindungsgemäßen Verfahrens und erlaubt zudem, daß durch die wahlweise Verwendbarkeit der Lüftungsöffnungen in beiden Strömungsrichtungen diese auch bei manchmal stattfindendem Eintritt von Rohmaterial freigehalten bzw. sofort wieder gereinigt werden können. Außerdem können die Lüftungsöffnungen zum Positionieren von Decklagen bzw. Verstärkungselementen oder Einlageteilen im Bereich der Formflächen herangezogen werden.

Durch die Ausbildung der Vorrichtung nach Anspruch 10 ist es durch den angeordneten Zwischenlagerbehälter möglich, eventuelle Gewichtsdifferenzen, die bei der Förderung entstehen können, auszugleichen, sodaß sichergestellt ist, daß immer eine ausreichende, für die Füllung der Form zur Herstellung eines Formteils vorhandene, Menge an Gemisch zur Förderung durch die Fördervorrichtung zur Verfügung steht.

Schließlich ist es durch die Ausbildung nach Anspruch 11 möglich, in einem Formteil in einander unmittelbaren Querschnittsbereichen bereits vor der Vernetzung bzw. der Verbindung der einzelnen Flocken über den Kunststoffschaum aus Primärmaterial unterschiedliche Dichten zu erzielen, sodaß damit auch Bauteile gleicher Dicken jedoch unterschiedlicher Dichte in einem Arbeitsgang herstellbar sind.

Die Erfindung wird im folgenden anhand der in den Zeichnungen dargestellten Ausführungsbeispiele näher erläutert.

Es zeigen:
- Fig. 1: eine Anlage zur Herstellung eines Formteiles in vereinfachter, schematischer Darstellung;
- Fig. 2: eine Form zur Herstellung eines Formteiles in vereinfachter, schematischer schaubildlicher Darstellung;
- Fig. 3: die Form nach Fig. 2 in Stirnansicht, geschnitten gemäß den Linien III-III in Fig. 2, in vereinfachter schematischer Darstellung mit einer in die Form eingelegten Decklage und einem zum Teil mit den Flocken aus Kunststoff gefüllten Innenraum;
- Fig. 4: die Form nach Fig. 2 oder 3 mit zur Vorverdichtung des Formteiles verstellten Formflächen in Draufsicht, geschnitten und vereinfachter schematischer Darstellung;
- Fig. 5: die Form nach den Fig. 2 bis 4 mit weiteren zur Vorverdichtung des Formteiles verstellten Formflächen in Stirnansicht, geschnitten und vereinfachter schematischer Darstellung;
- Fig. 6: den endgültig vorverdichteten Formteil in der Form nach den Fig. 2 bis 5 und nach dem Ausreagieren des flüssigen Kunststoffmaterials in vereinfachter schematischer Darstellung;
- Fig. 7: eine andere Ausbildung einer Form für einen Formteil in Seitenansicht, geschnitten und vereinfachter schematischer Darstellung;
- Fig. 8: die Form nach Fig. 7 mit den in unterschiedlichen Bereichen unterschiedlich stark verdichteten Flocken aus Kunststoffschaum;
- Fig. 9: einen Formteil gemäß den Fig. 7 und 8 in vereinfachter, schematischer, schaubildlicher Darstellung;

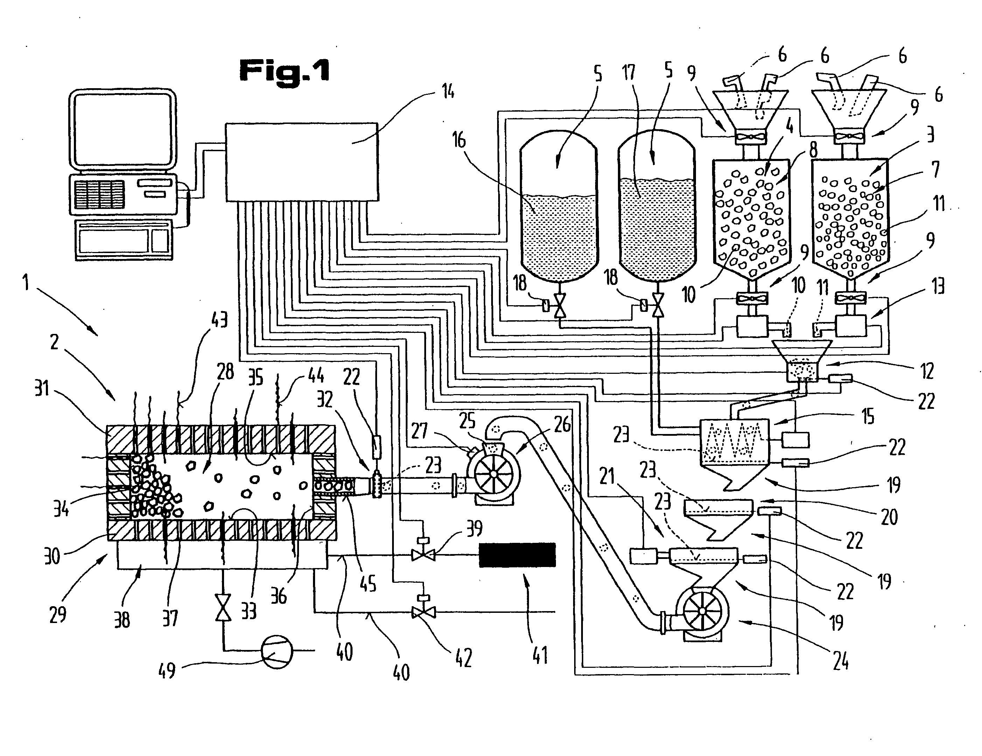

In Fig. 1 ist eine Anlage 1 zum Herstellen von Formteilen 2 gezeigt. Diese umfaßt mehrere Aufnahmebehälter 3, 4 und Aufnahmekessel 5 für unterschiedliche Teile 6 aus Kunststoffschaum 7, 8, bevorzugt auch Abfälle aus Kunststoffschäumen für das Recycling.

Die in den einzelnen Aufnahmebehältern 3, 4 enthaltenen Teile 6 können beispielsweise aus unterschiedlich harten Kunststoffschäumen oder Kunststoffschäumen mit oder ohne Beschichtungen bzw. Decklagen oder dgl. bestehen. Als Materialien können bevorzugt jeweils einzelne oder in vorbestimmbaren, beliebigen Verhältnissen untereinander gemischte PUR (Polyurethan)-Weichschaumabfälle, PUR-Kalt- und/oder Heißformschaumabfälle, PUR-Weichschaumabfälle mit Textilien und/oder Folien beschichtet bzw. kaschiert, PUR-Verbundschaumabfälle, aber auch Gummigranulate oder Korkgranulate verwendet werden. Dazu ist es möglich, daß für das Herstellen der Formteile 2 diesen vorgenannten Materialien noch thermoplastische Abfälle und/oder Natur- und/oder Kunstfasern in verschiedenen Längen zugesetzt sind. Soweit Abfälle aus Kunststoffschäumen vorgesehen sind, können diese aus Produktionsabfällen stammen oder es können selbstverständlich auch Teile 6 aus bereits gebrauchten, demontierten Teilen aus Kunststoffschäumen sein. Selbstverständlich ist es aber auch ohne weiteres möglich, Kunststoffschäume aus Primärmaterial, also extra für diesen Zweck neu hergestellte Kunststoffschäume auf die entsprechende Granulat- bzw. Flokkengröße zu verkleinern.

Selbstverständlich ist es einerseits auch möglich, daß in diesen Aufnahmebehältern 3, 4 größere Teile, wie sie beispielsweise beim Beschneiden von Formteilen, wie Polster, Matratzen, Schallschutzelementen oder Verkleidungselementen in der Autoindustrie, anfallen, enthalten sind, und andererseits, daß diese zur Wiederverwertung anstehenden Teile aus Kunststoff bzw. Kunststoffschäumen 7, 8 bereits vor der Einlagerung in die Aufnahmebehälter 3, 4 zerissen, zerschnitten oder sonst wie auf eine vorbestimmte Granulat- bzw. Flockengröße zwischen 3 mm und 20 mm, bevorzugt 5 mm bis 10 mm, zerkleinert werden.

Üblicherweise werden die Teile 6 vor der Einlagerung in die Aufnahmebehälter 3, 4 mittels Zerkleinerungsvorrichtungen 9, beispielsweise einem Reißwolf, einer Schneid-oder Reißmaschine, einer Mühle oder dgl., auf die gewünschte Granulatgröße bzw. Flockengröße verkleinert, sodaß sich in den Aufnahmebehältern 3, 4 bereits Flocken 10, 11 aus den verschiedenen Kunststoffen bzw. Kunststoffschäumen 7, 8 befinden. Befinden sich anstelle dessen in den Aufnahmebehältern .3, 4 noch die Teile 6 in der jeweils anfallenden Größe, so kann diesen Aufnahmebehältern 3, 4, wie schematisch angedeutet, eine Zerkleinerungsvorrichtung 9, beispielsweise ein Reißwolf, eine Schneid- oder Reißmaschine oder dgl., nachgeordnet sein. Von den Aufnahmebehältern 3, 4 werden die Flocken 10, 11 in dem dem jeweiligen Mischungsverhältnis entsprechenden Anteil beispielsweise mittels pneumatischer Förderung zu einem Wiegebehälter 12 transportiert. Die Regelung der Mengen der einzelnen Flocken 10, 11 kann dabei über Steuerventile 13, die von einer zentralen Steuervorrichtung 14 überwacht und beaufschlagt werden, erfolgen.

Die vorgemischte Charge aus Abfall bzw. Flokken 10, 11 aus Neustoff bzw. sonstigen Materialien, die gegebenenfalls auch in eigenen, zusätzlichen, nicht dargestellten Aufnahmebehältern 3, 4 angeordnet sein kann, wird dann beispielsweise wiederum durch pneumatische Förderung einer Mischvorrichtung 15, z.B. Mischtrommel zugeführt, in der sie mit einem flüssigen Rohmaterial 16 bzw. 17, beispielsweise einem Polyol und einem Isocyanat, vermischt wird, welches über Steuerventile 18, mengenmäßig in Abhängigkeit von der Steuervorrichtung 14 geregelt, zugeführt wird.

Ist eine ausreichende Vermischung der von den Aufnahmekesseln 5 zugeführten Rohmaterialien 16, 17 in der Mischvorrichtung 15 mit den Flocken 10, 11 erreicht bzw. die Durchmischung so gut, daß diese Flocken 10, 11 an ihrer Oberfläche im wesentlichen durchgehend mit diesem flüssigen Rohmaterial überzogen sind, so werden die mit dem flüssigen Rohmaterial beschichteten Flocken 10, 11 mit einer Fördervorrichtung 19, z.B. mit einem Gebläse oder einem Schnekkenförderer, einem weiteren Zwischenlagerbehälter 20 zugeführt. Dieser Zwischenlagerbehälter 20 kann als Wiegebehälter 12 ausgebildet, also mit einem Meßwertgeber zum Erfassen des Gewichtes verbunden sein, der üblicherweise auch mit der Steuervorrichtung 14 zusammengeschaltet ist, welchem eine Wiegevorrichtung 21 nachgeordnet ist Die Fördervorrichtung 19 der Mischvorrichtung 15, die beispielsweise nur schematisch angedeutet ist, kann auch durch eine Schwerkraftförderung, z.B. einen mit einem Verstellantrieb 22 verstellbaren Schieber 23 im Auslaßbereich der Mischvorrichtung 15, gebildet sein, über die die mit den Rohmaterialien 16, 17 vermischten Flocken 10, 11 dem Zwischenlagerbehälter 20 zugeführt werden.

In diesem Zwischenlagerbehälter 20 wird nun bevorzugt eine Gemischmenge eingefüllt, die ausreicht, um den mit der Anlage größtmöglichen Formteil herstellen zu können. Es kann aber auch ein beliebiges Vielfaches dieser Menge in den Zwischenlagerbehälter 20 auf Vorrat gehalten werden.

Aus diesem Zwischenlagerbehälter 20 wird je nach dem gewünschten Teilgewicht unter Verwendung der zugehörigen Fördervorrichtung 19 bzw. des über den Verstellantrieb 22 verstellbaren Schiebers 23 eine Menge an mit Rohmaterial 16, 17 vermischten Flocken 10, 11 der dem Zwischenlagerbehälter 20 nachgeordneten Wiegevorrichtung 21 zugeführt, die um üblicherweise 3 % bis 15 %, bevorzugt zwischen 5 % und 10 %, über dem endgültigen Teilegewicht eines herzustellenden Formsteils liegt. Die Zufuhr des Gemisches aus dem Zwischenlagerbehälter 20 in die Wiegevorrichtung 21 wird ebenfalls über einen schematisch dargestellten Meßwertgeber, von welchem die Daten an die Steuervorrichtung 14 übermittelt werden, überwacht und die Förderung des Gemisches aus dem Zwischenlagerbehälter 20 bei Erreichen des Sollgewichtes unterbrochen.

Aus der Wiegevorrichtung 21 kann durch entsprechende Steuerung über die Steuervorrichtung 14 der Verstellantrieb 22, zum Beispiel eine pneumatische Zylinder-Kolbenanordnung oder ein Schrittschaltmotor oder dergleichen, zur Bewegung des Schiebers 23 angesteuert werden. Unter Berücksichtigung des sich in der Wiegevorrichtung 21 durch die Abförderung verringernden, mit dem Meßwertgeber überwachten Gewichtes des Gemisches aus mit Rohmaterial 16, 17 beschichteten Flocken 10, 11 zu einer nachgeordneten Fördervorrichtung 24 wird die Förderung so lange fortgeführt, bis eine einem Sollgewicht des Gemisches für die Herstellung des Formteiles benötigte Menge an Gemisch aus der Wiegevorrichtung 21 ausgetragen ist.

Die nachgeordnete Fördervorrichtung 24, mit der das aus Rohmaterial 16, 17 der Flokken 10, 11 gebildete Gemisch einem Auffangtrichter 25 eines diesem nachgeordneten Fördergebläses 26 zugeführt wird, kann als Schneckenförderer oder Gebläseförderer ausgebildet sein. Ein Antrieb 27 des Fördergebläses 26 wird ebenso über die Steuervorrichtung 14 gesteuert.

Nach Öffnen eines weiteren, dem Fördergebläse 26 nachgeordneten und von der Steuervorrichtung 14 beaufschlagten, Schiebers 23 bzw. einem mit diesem verbundenen Verstellantrieb 22 kann nun das Gemisch aus Flocken 10, 11 und Rohmaterial 16, 17 in einen Formhohlraum 28 einer Form 29, bestehend aus einem Formunterteil 30 und einem Formoberteil 31, eingeblasen werden.

Die Steuerung der Zufuhr dieser mit dem flüssigen Rohmaterial beschichteten Flocken 10, 11 kann ebenfalls über ein Steuerventil 32, z.B. einem Schieber 23, erfolgen, welches wiederum von der Steuervorrichtung 14, ebenso wie das Füllgebläse 26, gesteuert sein kann.

In einzelnen Formflächen 33 bis 36 können entweder in allen oder in einzelnen davon, zumindest jedoch in der der Einströmöffnung gegenüberliegenden Formfläche 34, Durchgangsöffnungen bzw. Lüftungsöffnungen 37 angeordnet sein, die den Formhohlraum 28 mit einer Umgebungsluft bzw., wie schematisch angedeutet, mit einem Abzugskanal 38 verbinden.

In den Abzugskanal 38 mündet ebenfalls über ein Steuerventil 39, welches durch die Steuervorrichtung 14 beaufschlagt wird, eine Speiseleitung 40 über die beispielsweise Wasserdampf, vorzugsweise Trokkendampf mit einer Temperatur von 160°C bis 180°C, oder ein anderes Reaktionsmittel, z.B. von einem Wärmetauscher 41 oder einer Dampfstation, in den Abzugskanal 38 eingespeist werden kann. Dies erfolgt beispielsweise dadurch, daß der Abzugskanal 38 über ein Sperrventil 42, welches von der Steuervorrichtung 14 beaufschlagt wird, verschlossen wird, worauf zwischen diesem Sperrventil 42 und dem Formhohlraum 28 über die Speiseleitung 40 dieses Reaktionsmittel bzw. der Dampf eingeführt und nach dem Durchströmen des Formhohlraumes 28 durch die nicht verschlossenen Lüftungsöffnungen 37 wieder ausströmen kann. Nicht nur die während des Einbringens der Flocken 10, 11 in den Formhohlraum 28 eingebrachte Luft kann gemäß schematisch angedeuteten Pfeilen 43 durch diese Lüftungsöffnungen 37 abgeführt werden, sondern es kann auch der schematisch durch einen Pfeil 44 angedeutete Wasserdampf in den Formhohlraum 28 eingebracht und aus diesem wieder entfernt werden.

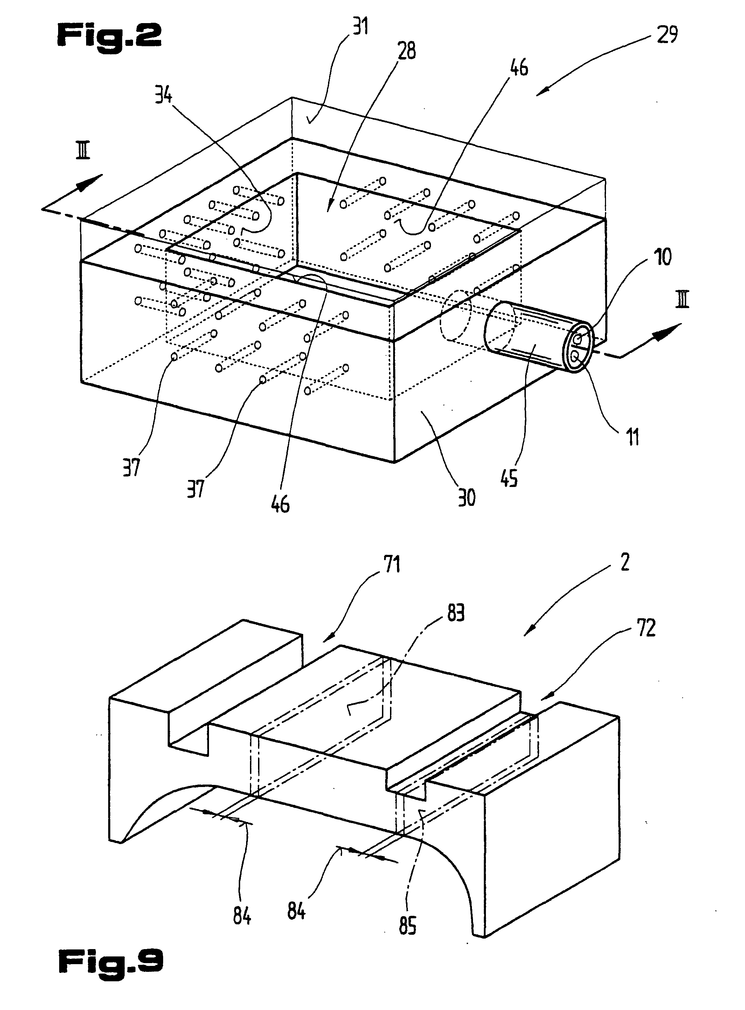

In den Fig. 2 bis 6 ist die Form 29 in vereinfachter, schematischer Darstellung, jedoch in größerem Maßstab dargestellt.

So ist aus diesen Darstellungen ersichtlich, daß die Flocken 10, 11 durch eine Zufuhrleitung 45 in den Formhohlraum 28 eingebracht werden können und es sind auch die Lüftungsöffnungen 37 in diesem Fall an den im Bereich der zu den Formflächen 34 und 46 parallel laufenden Seitenwänden angeordnet, sodaß die mit dem Gemisch aus den Flocken 10, 11 einströmende Luft durch diese Lüftungsöffnungen 37 ins Freie bzw. in die anhand der Fig. 1 beschriebenen Abzugskanäle abströmen kann.

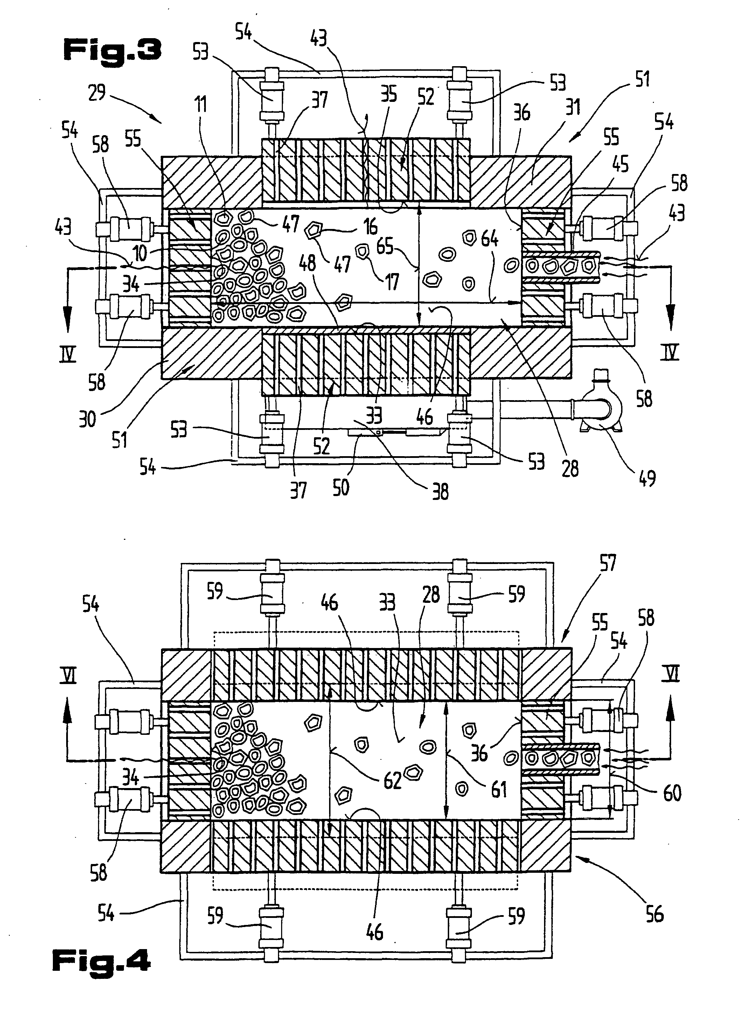

Wie besser aus der Darstellung in Fig. 3 ersichtlich, werden die Flocken 10, 11 durch die mit den Pfeilen 43 angedeutete Luftströmung in den Formhohlraum 28 hineingerissen und darin bzw. an den Formflächen 33 bis 36 und 46, wie schematisch angedeutet, abgelagert Aus der Darstellung ist auch zu ersehen, daß jede der Flocken 10, 11 mit einer umlaufenden Beschichtung 47 aus dem noch flüssigen Gemisch aus den Rohmaterialien 16, 17 zur Bildung des Kunststoffschaumes beschichtet ist.

Üblicherweise bestehen zwischen 70 % und 90 %, bevorzugt 85%, des Volumens des herzustellenden Formteils 2 aus Flocken 10, 11 aus Kunststoffschaum aus dem Rohmaterial 16, 17. 10 % bis 20 % des Gewichtes des Formteiles 2 werden durch den Kunststoffschaum 7, 8 aus dem Primärmaterial bzw. Rohmaterial 16, 17 gebildet. Die Flokken 10, 11 aus Kunststoffschaum 7, 8 weisen üblicherweise ein Raumgewicht zwischen 20 kg/m³ und 250 kg/m³, bevorzugt 50 kg/m³ bis 150 kg/m³ auf. Das Raumgewicht des aus dem Rohmaterial 16, 17 hergestellten Kunststoffschaumes beträgt zwischen 800 kg/m³ und 1200 kg/m³. Letzterer ist bevorzugt halbsteif bzw. halbhart eingestellt.

Weiters ist in Fig. 3 auch gezeigt, daß vor dem Einbringen der Flocken 10, 11 beispielsweise auf die Formfläche 33, also dem Boden der Form 29, eine Decklage 48, beispielsweise ein Faservlies oder Gewirke, Gewebe, Gitter, Netz aus natürlichen oder künstlichen Fasern, bevorzugt in einen vertieften Formflächenteil eingelegt sein kann.

In diesem Fall ist es bei getrennter Ansteuerung der Lüftungsöffnungen 37 im Bereich der einzelnen Formflächen 33 bis 36 und 46 möglich, diese Lüftungsöffnungen 37 durch Anlegen eines Vakuums, beispielsweise über eine Vakuumpumpe 49 und über getrennt von der Steuervorrichtung steuerbare Klappen 50 zum Festhalten der Decklage 48 einzusetzen. Die mit dem Abzugskanal 38 in Verbindung stehende Vakuumpumpe 49 ist auch in Fig. 1 schematisch angedeutet.

Durch die Vakuumpumpe 49 kann, vor allem dann, wenn die Decklage 48 luftdurchlässig ist, gleichzeitig auch ein Teil der Transportluft abgesaugt werden bzw. strömt diese sonst durch die verbleibenden Lüftungsöffnungen 37 gemäß den Pfeilen 43 aus dem Formhohlraum 28 ab.

ist dann der Formhohlraum 28 mit den Flocken 10, 11 gleichmäßig von hinten nach vorne gefüllt, wird das Fördergebläse 26 abgeschaltet und die Zufuhrleitung 45 mit dem Schieber 23 (aus Fig. 1 ersichtlich) verschlossen. Gegebenenfalls kann das Fördergebläse 26 von der Form 29 - vor allem dann, wenn dieses auf einem Drehtisch oder auf einer Fördervorrichtung zum Beschicken unterschiedlicher Arbeitsplätze angeordnet ist - abgekoppelt werden.

Vorteilhaft ist für das vorliegende Verfahren bzw. die Herstellung des Formteiles 2, daß das Volumen des Formhohlraumes 28 um etwa 10 % bis 50 %, bevorzugt 20 % bis 30 % größer ist, als das Volumen des fertigen Formteiles 2. Die generelle Vorverdichtung des eingebrachten, mit Rohmaterial 16, 17 versehenen Gemenges erfolgt nun derart, daß eine, mehrere oder alle der Formflächen 33 bis 36 und 46 in Abhängigkeit von den herzustellenden, unterschiedlichen Formteilen 2 in unterschiedliche Positionen gegenüber ihrer Ausgangsstellung verstellt werden.

Dazu können die einzelnen Formflächen 33 bis 36 und 46 aus mehreren Teilen bestehen. Bei den vorliegend dargestellten Ausführungsbeispielen in den Fig. 3 bis 6 sind nur die Formflächen 33, 35 und 46 mehrteilig ausgebildet.

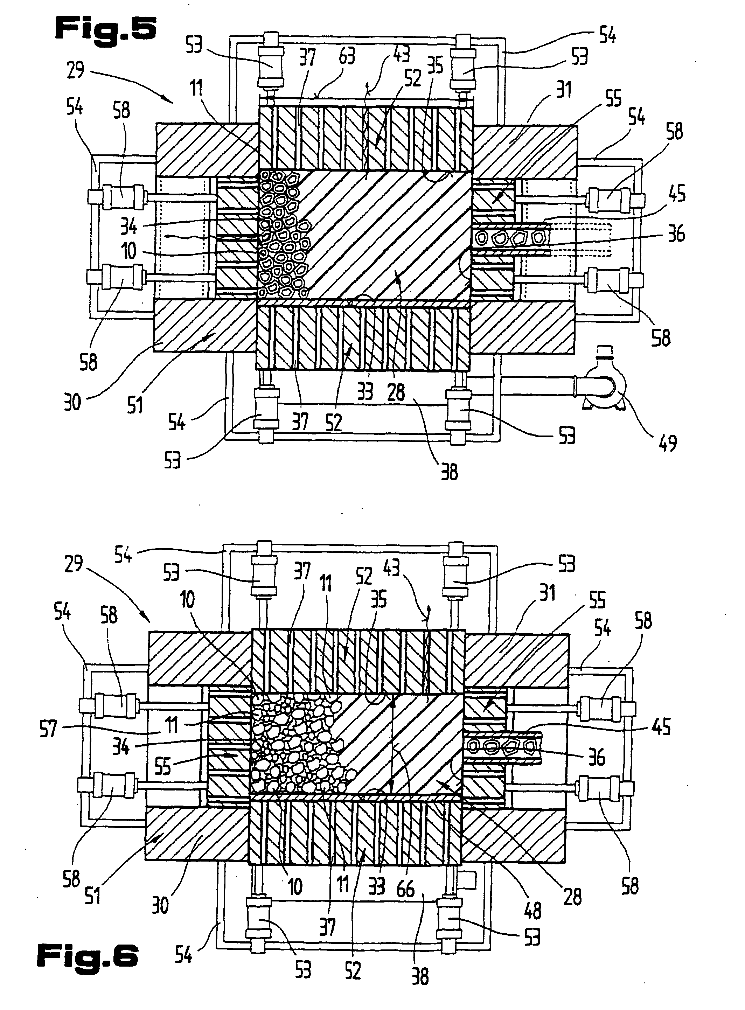

So besteht die Formfläche 33 aus einem umlaufenden Formkranz 51 und einem verstellbaren Mittelteil 52, der, wie schematisch angedeutet, durch einen Verstellantrieb 53 - beispielsweise einem Pneumatik- oder Hydraulikzylinder, der sich, wie schematisch angedeutet, auf einem Formrahmen 54 abstützen kann - unter Ansteuerung der Steuervorrichtung 14 bzw. von dieser beaufschlagten Energiequellen, wie beispielsweise Druckluftkompressoren bzw. Hydraulikpumpen, beaufschlagbar ist. Gleichermaßen besteht auch die Formfläche 35 aus einem umlaufenden Formkranz 51 und einem in gleicher Art verstellbaren Mittelteil 52, der wiederum über einen schematisch angedeuteten Verstellantrieb 53 gegenüber dem Formkranz 51, der ebenso wie der Formkranz 51 der Formfläche 33 in einem Formrahmen 54 gehaltert ist, verstellbar. Die Formflächen 46 sind dagegen einteilig ausgebildet und die Formfläche 34 ist, wie besser aus der Darstellung in Fig. 6 zu ersehen ist, ebenfalls aus einem Mittelteil 55 und zwei Seitenteilen 56 und 57 (aus Fig. 4 ersichtlich) zusammengesetzt, wobei die Seitenteile feststehend im Formrahmen 54 sind und der Mittelteil, wie aus Fig. 3 ersichtlich, über einen Verstellantrieb 58 gegenüber den übrigen Formelementen verstellbar ist.

Wie nun aus dem in den Fig. 3 bis 5 dargestellten Verfahrensablauf zu entnehmen ist, werden zuerst Formflächen 46 mit ihnen zugeordneten Verstellantrieben 59 aus ihrer in Fig. 4 in strichlierten Linien gezeichneten, der Stellung in Fig. 3 entsprechenden, Ausgangsstellung in die verdichtete Endstellung - in vollen Linien gezeichnet - verstellt. Eine Distanz 60 zwischen diesen beiden einander gegenüberliegenden Formflächen 46 entspricht dann exakt einer zur Distanz 60 parallel laufenden Breite 61 des Mittelteiles 52 der Formfläche 33.

Je nach dem Verhältnis zwischen einer Ausgangsbreite 62 und der Distanz 60 wird ein unterschiedliches Verdichtungsverhältnis bzw. eine unterschiedliche Verdichtung der im Formhohlraum 28 angeordneten Flocken 10, 11 bzw. des Granulates, welches mit dem noch flüssigen Kunststoff beschichtet ist, erzielt.

Anschließend an diesen Verdichtungsvorgang kann, wie in Fig. 5 gezeigt, der Mittelteil 55 der Formfläche 34 aus der in strichlierten Linien in Fig. 5 und in vollen Linien in Fig. 3 gezeigten Stellung in die nunmehr in Fig. 5 gezeigte verdichtete Stellung mittels des Verstellantriebes 58 verstellt werden. Gleichzeitig kann beispielsweise nach einem entsprechenden Entkoppeln der Zufuhrleitung 45 vom Fördergebläse 26 auch die Formfläche 36 bzw. ein der Formfläche 34 äquivalenter Mittelteil 55 aus der in Fig. 3 in vollen Linien in die in Fig. 5 in vollen Linien gezeichnete verdichtete Stellung verstellt werden. Durch die Verstellung dieser Mittelteile 55 relativ zu den zusammengefahrenen Formflächen 46 wird nun eine Länge 63 des Formteiles 2 auf eine vorgeplante Länge der Mittelteile 52 der Formflächen 33 und 35 verringert. Durch die Differenz zwischen einer Ausgangslänge 64 (Fig. 3) des Formhohlraurnes 28 zwischen den Formflächen 34 und 36 und der fertigen Länge 63 wird ebenfalls der weitere Verdichtungsfaktor des Formteiles 2 bestimmt.

Schließlich kann dann, wie aus Fig. 6 ersichtlich, die weitere Verdichtung des noch unverfestigten Formkörpers, also der noch relativ zueinander bewegbaren Flocken 10, 11 mit ihrer Beschichtung 47 eine Ausgangshöhe 65 (Fig. 1) des Formhohlraumes 28 auf eine Höhe 66 durch das Zusammenfahren der Mittelteile 52 der Formflächen 33 und 35 erreicht werden.

Mit diesem letzten Verstellvorgang ist der artikelspezifische Verpreßvorgang abgeschlossen. Das ursprüngliche Volumen ist durch diese Zustell- bzw. Verstellvorgänge der einzelnen Formflächenteile bzw. der Mittelteile 52, 55 und der Formflächen 46 um die gewünschten 10 % bis 50 % verringert

Dazu ist festzuhalten, daß ein durchschnittliches Gewicht der Formteile 2 zwischen 20 kg und 300 kg beträgt. Die Verstellung ist, wie bereits zuvor beschrieben, mittels der Verstellantriebe, die durch Hydraulik- oder Pneumatikzylinder gebildet sein können, erfolgt. Die Reihenfolge der Verschiebung der einzelnen Formflächen bzw. Formflächenteile, wie Mittelteile 52 oder 55 und der Formflächen 46, wurde nur beispielshaft anhand der Ausführungen in den Fig. 3 bis 6 erläutert. Die Aufeinanderfolge der Bewegungen der einzelnen Formflächen bzw. deren Mittelteile oder sonstigen Formteile kann in Abhängigkeit vom Artikel oder von der erreichten Endhärte und dgl. jeweils bei jedem einzelnen Formteil 2 unterschiedlich festgelegt werden. Es ist auch möglich, daß die Hebe- bzw. Verstellwege der einzelnen Formflächen bzw. Formflächenteile oder der Mittelteile derselben unterschiedlich groß erfolgen, sodaß in unterschiedlichen Raumrichtungen des Formteiles 2 unterschiedliche Verdichtungswerte, beispielsweise durch Verdichtungen in Höhenrichtung nur um 15 % des Volumens und der Verdichtung in Längsrichtung des Bauteiles um 30 % des Volumens oder durch die Verdichtung in Richtung der Breite durch Verringerung des Volumens um 35 %, erreicht werden.

Anschließend an diese artikelspezifische Vorverdichtung deckt nunmehr beispielsweise die ursprünglich, sich nur über einen Teil der Ausgangslänge 64 und der Ausgangsbreite 62 der Formfläche 33 sich erstreckende Decklage 48 eine Oberfläche des Formteiles 2 vollflächig ab, wie dies aus Fig. 6 zu ersehen ist.

Daran anschließend wird nun, wie bereits anhand der Fig. 1 schematisch beschrieben, das Reaktionsmedium, beispielsweise ein Dampf mit einer Temperatur von 160°C bis 180°C, insbesondere ein Trockendampf, in den Formhohlraum 28 über die Lüftungsöffnungen 37 oder eigens dafür angeordnete Öffnungen zugeführt. Durch dieses Reaktionsmittel, insbesondere den Dampf oder ein Lösungsmittel, wird die Reaktion der flüssigen Beschichtung 47 bzw. des Kunststoffes eingeleitet, und es kommt beispielsweise zu einem Aufschäumen dieses flüssigen Rohmaterials durch eine entsprechende Gasbildung und zur Bildung eines Zellgerüstes aus offenen und/oder halboffenen und/oder geschlossenen Zellen zwischen den einzelnen Flocken 10, 11, wie dies in Fig. 6 auch schematisch bereits angedeutet ist.

Dadurch werden die ursprünglich losen Flokken 10, 11 in ein, je nach der gewünschten Festigkeit aufgrund des verwendeten Rohmaterials weiches, mittelhartes oder hartes Zellgerüst eingebunden, und es entsteht ein verfestigter Formteil 2 mit der gewünschten Dichte und Härte.

Nach dem Ausreagieren der Beschichtung 47 und dem Aufbau eines entsprechenden Zellgerüstes im Formteil 2 kann, vor allem dann, wenn die Form taktweise durch eine Formstraße bewegt wird, beispielsweise mit einem Rundtisch, die Form 29 auch einer Trockenstation zugeführt werden, wo durch die Lüftungsöffnungen 37 beispielsweise heiße, trockene Luft hindurchgeführt werden kann, um den Formteil nach dem Ausreagieren zu trocknen.

Nach der ausreichenden Trocknung des Formteiles 2 werden die entsprechenden Zufuhröffnungen für diese Trockenluft geschlossen und die Form 29 kann geöffnet und der Formteil 2 entnommen werden.

Selbstverständlich ist es im Rahmen der vorliegenden Erfindung möglich, die einzelnen Arbeitsschritte manuell, halb- oder vollautomatisch abzuwickeln oder über eine Gesamtsteueranlage unter Verwendung einer Steuervorrichtung 14 teil- oder vollautomatisch zu steuern.

Anstelle der aus mehreren Teilen bestehenden Formflächen 33 bis 36 und 46 können beispielsweise auch Formflächen mit einer Vielzahl von einzelnen Formstempeln verwendet werden, um so eine rasche Umstellung der Form für die Herstellung unterschiedlicher Formteile zu ermöglichen. Die Oberfläche oder der Formhohlraum 28 kann dann beispielsweise über ein entsprechendes Steuerprogramm an den jeweils herzustellenden Artikel vollautomatisch vorprogrammiert werden, ebenso die nachfolgenden einzelnen Verdichtungsvorgänge.

So ist des weiteren auch möglich, daß beispielsweise die Mittelteile 52 der Formflächen 33 oder 35 auf ihrer dem Formhohlraum 28 zugewendeten Oberfläche mit einer beliebigen Raumform versehen sein können. Sollte dies für die Vorverdichtung nicht günstig sein, ist es auch möglich, zuerst einen ebenflächigen Mittelteil 52 zur Vorverdichtung der Flocken 10, 11 einzusetzen und vor Einleitung des Reaktionsvorganges bzw. des Ausreagierens der Beschichtung 47 oder des Kunststoffmaterials durch einen Mittelteil 52 mit einer bestimmten Raumform zu ersetzen, um so bereits im Herstellungsvorgang dem Formteil 2 eine gewünschte räumliche Verformung zu erteilen. Dieses kurzzeitige Öffnen und wieder Schließen kann auch dazu verwendet werden, um auf einer oder mehreren der Oberflächen des Formteiles 2, wie dies schematisch anhand der Decklage 48 angedeutet wird, Decklagen im Zuge des Herstellungsvorganges des Formteiles 2 direkt an diesem zu befestigen.

Je nach dem verwendeten Rohmaterial 16, 17, bei dem es sich üblicherweise um einen Polyurethan-, Polyether- oder Polyesterschaum handeln kann, der weich, mittelhart oder hart eingestellt sein kann, wird dann eine geschlossene oder offenzellige Struktur gebildet, in die die einzelnen Flocken 10, 11 dann eingebettet sind.

Der Vorteil dieser Lösung liegt nun vor allem darin, daß durch den Antransport der Flocken 10, 11 durch die Luftströmung in einen geschlossenen Formhohlraum 28 aufgrund des gleichmäßigen Abströmens der Luft eine gleichmäßige volle Füllung des Formhohlraumes 28 unter Ausschaltung eines stärkeren Zusammenpackens der in sich elastischen und durch Gewichtsbelastung verformbaren Flocken 10, 11 erreicht wird. Dadurch, daß die Flocken durch den ständig durchströmenden Luftstrom, gemäß den Pfeilen 43, während der Füllung des Formhohlraumes 28 in Schwebe gehalten werden, und nach Abschalten des Luftstroms durch das Rohmaterial der Beschichtung 47 lose aneinander anhaften, wird auch im Zuge einer Serienproduktion mit hoher Wiederholtaktzahl eine Produktion von Formteilen 2 geschaffen, die über ihren gesamten Querschnitt ein gleiches, durchschnittliches Raumgewicht und eine gleichmäßige Verteilung der Flocken 10, 11, insbesondere auch der unterschiedlichen Recyclingstoffe mit den unterschiedlichen Raumgewichten bzw. Beschichtungsteilen, ermöglicht.

Durch die vorhergehende Mischung der Flokken 10, 11 aus den Aufnahmebehältern 3, 4 und durch das im Zwischenlagerbehälter 20 vorherbestimmbare Füllgewicht des Formhohlraumes 28 kann auch die Grunddichte, die erzielt wird, vorgewählt werden, wobei diese gegebenenfalls zusätzlich durch die Luftströmung bzw. den mit der Luftströmung erzeugten Luftdruck im Formhohlraum 28 beeinflußbar ist Durch den Luftdruck wird nämlich bei zunehmender Füllung des Formhohlraumes 28 mit den Flocken 10, 11 ein größerer Widerstand der durchströmenden Luft entgegengestellt und je nach der vorgewählten Druckhöhe der Transportluft eine äquivalente Dichte in den lose im Formhohlraum 28 befindlichen Flocken 10, 11 bzw. dem vorgeformten Rohformteil geschaffen.

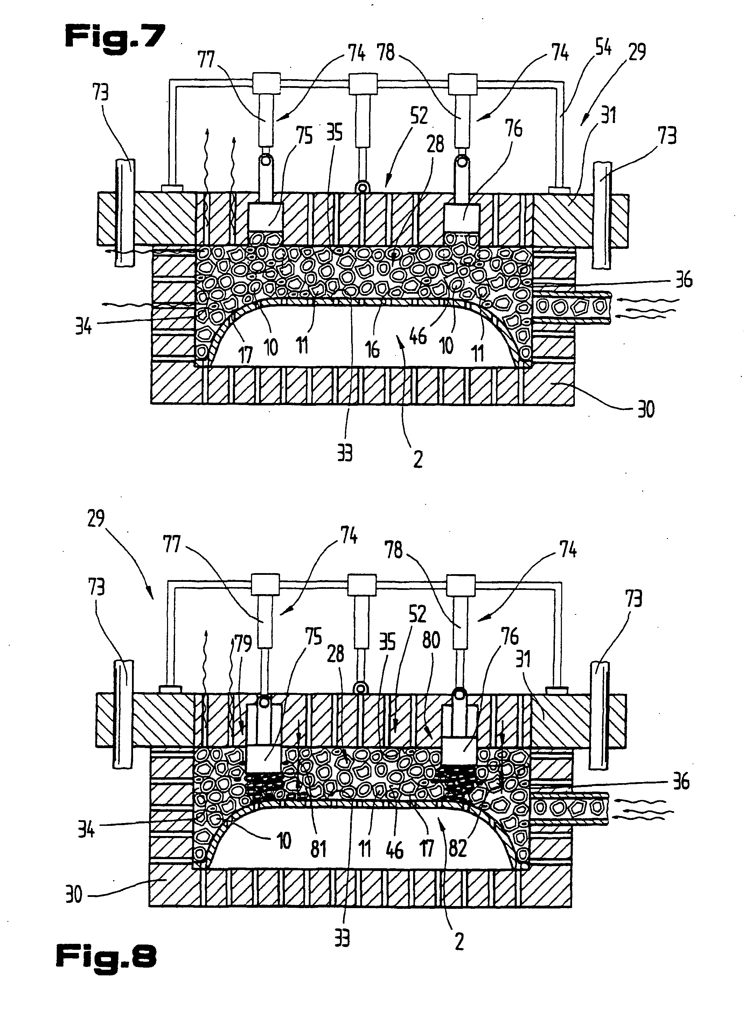

In den Fig. 7 bis 9 ist weiters gezeigt, daß der Formhohlraum 28 auch zur Herstellung von räumlich gekrümmten Formteilen 2, wie dieser beispielsweise in Fig. 9 gezeigt ist, verwendet werden kann.

Wie aus der Darstellung des Formteiles 2 in Fig. 9 weiters zu ersehen ist, kann dieser auch mit vertieften Ausnehmungen 71, 72 versehen sein.

Wie dann anhand der verwendeten Formen dargestellt ist, ist es nunmehr, beispielsweise durch die generelle Vorverdichtung des Formteiles 2 aufgrund der Verstellung eines Mittelteiles 52 der Formfläche 35, gleichzeitig möglich, in den Querschnittsbereichen, in welchen die Ausnehmungen 71, 72 im Formteil 2 angeordnet sind, die Dichte im Formteil zu erhöhen.

Dies erfolgt derart, daß in der Formfläche 35, beispielsweise entlang von Führungssäulen 73 mittels Verstellantrieben 74, beispielsweise fluidisch betätigte Kolbenzylinderanordnungen, verstellbare Formeinsätze 75, 76 angeordnet sind, die über Einstellantriebe 77, 78 aus der in Fig. 7 in vollen Linien gezeigten in die in Fig. 8 in vollen Linien gezeigte Stellung verstellbar sind.

Dadurch wird, wie dies aus der unterschiedlichen Dichte der schematisch angedeuteten Flocken 10, 11 in den Fig. 7 und 8 ersichtlich ist, der Formhohlraum 28 während des Einblasens der mit dem Rohmaterial 16, 17 beschichteten Flocken 10, 11 vergrößert und im gesamten Formhohlraum eine Füllung mit gleicher Dichte erreicht.

Um nunmehr in Bereichen 79, 80 des Formteiles 2 eine höhere Dichte der Flocken 10, 11 und des dazwischen befindlichen Schaumgerüstes aus dem Rohmaterial 16, 17 zu erreichen, ist - zusätzlich zu der generellen Vorverdichtung der Flocken 10, 11, wie sie durch die Verstellung des Mittelteiles 52 der Formfläche 35 durch den Verstellantrieb 53 erreicht wird oder unabhängig davon - der Formeinsatz 75 und/oder 76 über die Einstellantriebe 77, 78 aus der in Fig. 7 in vollen Linien gezeichneten Ruhe- bzw. Füllstellung für den Formhohlraum 28 in die in Fig. 7 in strichlierten und in Fig. 8 in vollen Linien gezeichnete Verdichtungsstellung verstellbar.

Wie dies auch schematisch durch die dichtere Lage der Flocken 10, 11 in Fig. 8 angedeutet ist, wird dadurch die Dichte in den Bereichen 79, 80 des Formhohlraumes 28 entsprechend einer jeweiligen Eindringtiefe 81 bzw. 82 erhöht, wodurch dann beim nachfolgenden Ausreagieren des flüssigen Rohmaterials 16, 17 eine aufgrund der höheren Dichte stärker verfestigte Zone im Formteil 2 erreicht wird.

Dies hat beispielsweise den Vorteil, daß in diesem Bereich Befestigungselemente angeordnet werden können, mit welchen der Formteil 2 bei Verwendung als Schallisolationsmatte oder Innenverkleidung in einem Fahrzeug an der Karosserie befestigt werden kann.

Die Verdichtung kann aber auch deswegen angeordnet werden, um dem Formteil 2 insgesamt aufgrund der Formgebung eine höhere Steifigkeit oder Festigkeit zu verleihen.

Selbstverständlich ist es aber auch möglich, falls in diesem Bereich, in welchem die Ausnehmungen 71 und 72 vorgesehen sind, keine höhere Dichte des Formteiles 2 benötigt wird, daß die Formeinsätze 75, 76 bereits vor dem Einblasen der Flocken 10, 11 in die in Fig. 7 in strichlierten Linien dargestellte Stellung verstellt werden. Dies bewirkt, daß dann ein Formteil 2 entsteht, in dem zwar die Ausnehmungen 71, 72 angeordnet sind, dieser Formteil 2 weist aber dann über seinen gesamten Querschnitt eine durchschnittliche, gleiche Dichte auf.

Die durchschnittliche, gleiche Dichte wird wie folgt ermittelt bzw. verglichen:

Es wird das Gewicht einer Querschnittsscheibe 83 - wie in Fig. 9 gezeigt - mit einer Dicke 84 ermittelt und aus dem Volumen und dem vorhandenen Gewicht errechnet, welches Volumen diese Querschnittsscheibe 83 bei einem vordefinierten Referenz-Raumgewicht haben würde.

Danach wird das Gewicht einer weiteren Querschnittsscheibe 85 mit bevorzugt gleicher Dicke 84 ermittelt und ebenfalls aus den gewonnenen Daten das Volumen bei dem für die Berechnung angenommenen Referenz-Raumgewicht ermittelt. Die somit ermittelten Werte der auf ein gleiches Referenz-Raumgewicht bezogenen Volumina werden dann rückbezogen auf ein festgelegtes Referenzvolumen, und es ist eine gleiche durchschnittliche Dichte und/oder ein Raumgewicht vorhanden, wenn bei dem Referenzvolumen das ermittelte Raumgewicht bzw. die Dichte gleich ist bzw. nicht mehr als +/- 15 %, bevorzugt +/- 7,5 %, davon abweicht.

Darunter versteht man, daß der Raumgewichtsvergleich auf die Verhältnisse rückbezogen ist, wie sie beim Einblasen der Flocken 10, 11 in den Formhohlraum 28 vorliegen, in welcher Situation eben auch aufgrund des durch das Zurückziehen der Formeinsätze 75, 76 bzw. der Formflächen 33 bis 36 und 46 größeren Volumens des Formhohlraumes 28 dieses mit den Flocken 10, 11 mit gleicher Dichte gefüllt ist.

Die schematisch angedeutete und in Fig. 8 gezeigte höhere Verdichtung in den Bereichen 79 und 80 des Formteiles 2 wird nur dadurch erreicht, daß die ursprünglich mit gleicher Dichte eingebrachten Flocken 10, 11 durch eine bewußte Volumensverringerung partiell höher verdichtet werden und damit natürlich auch das Raumgewicht aufgrund des verringerten Volumens erhöht wird. Selbstverständlich ist es auch bei dieser Ausführungsvariante möglich, nicht nur in Richtung der Formfläche 35, sondern auch in Richtung der übrigen Formflächen 33, 34, 36 und 46 eine Vorverdichtung durchzuführen. Desgleichen ist es aber auch möglich, zusätzlich verstellbare Formeinsätze 75 und 76 beliebiger Art und Konfiguration auch in den anderen Formflächen 33, 34 bzw. 36 und 46 anzuordnen.

Der Ordnung halber sei an dieser Stelle noch festgehalten, daß auch jedes einzelne der dargestellten Ausführungsbeispiele bzw. der in den Patentansprüchen gekennzeichneten Merkmalskombinationen eine für sich eigenständige, erfindungsgemäße Lösung bilden kann. Dazu kommt, daß auch einzelne Merkmale der einzelnen Ausführungsbeispiele, in beliebiger Zusammensetzung miteinander kombiniert, den Gegenstand von eigenständigen, erfindungsgemäßen Lösungen bilden können.

Zum besseren Verständnis der Wirkungsweise des Verfahrens und des Aufbaus des Formteiles 2 wurden einzelne Schichten und Beschichtungen der Flokken 10, 11, die Flocken selbst bzw. der Formteil 2 unproportional und größenmäßig verzerrt bzw. stark übertrieben dargestellt. Gleiches gilt auch für die vielfach nur vereinfacht, schematisch dargestellten Vorrichtungen und Formen zur Herstellung derartiger Formteile.

Als Formmaterialien für die Formen 29 können vor allem aus Epoxyharz oder harzhinterfütterte Metalllegierungen sowie aus Aluminium gegossene, herausgefräste oder durch Aluminiumblech gebildete Formen, sowie aus Stahl oder Eisenblech hergestellte Formen verwendet werden.

Schließlich ist noch darauf hinzuweisen, daß ein Vorteil bei der Herstellung von Formteilen 2 aus Recyclingmaterialien durch die zuvor beschriebene Verfahrensweise dadurch erreicht wird, daß die alten Recyclingmaterialien, dann wenn das Aushärten bzw. Ausreagieren des Rohmaterials 16, 17 durch einen Heißdampf oder eine heiße Luft erfolgt, die gegebenenfalls auch verschmutzt sind, durch die hohen Temperaturen sterilisert und damit vor unerwünschten Pilzen, Keimen oder dgl. befreit werden.

Vor allem können die einzelnen, in den Fig. 1; 2 bis 6; 7, 8; 9 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Anlage
- 2: Formteil
- 3: Aufnahmebehälter
- 4: Aufnahmebehälter
- 5: Aufnahmekessel
- 6: Teil
- 7: Kunststoffschaum
- 8: Kunststoffschaum
- 9: Zerkleinerungsvorrichtung
- 10: Flocke
- 11: Flocke
- 12: Wiegebehälter
- 13: Steuerventil
- 14: Steuervorrichtung
- 15: Mischvorrichtung
- 16: Rohmaterial
- 17: Rohmaterial
- 18: Steuerventil
- 19: Fördervorrichtung
- 20: Zwischenlagerbehälter
- 21: Wiegevorrichtung
- 22: Verstellantrieb
- 23: Schieber
- 24: Fördervorrichtung
- 25: Auffangtrichter
- 26: Fördergebläse
- 27: Antrieb
- 28: Formhohlraum
- 29: Form
- 30: Formunterteil
- 31: Formoberteil
- 32: Steuerventil
- 33: Formfläche
- 34: Formfläche
- 35: Formfläche
- 36: Formfläche
- 37: Lüftungsöffnung
- 38: Abzugskanal
- 39: Steuerventil
- 40: Speiseleitung
- 41: Wärmetauscher
- 42: Sperrventil
- 43: Pfeil
- 44: Pfeil
- 45: Zufuhrleitung
- 46: Formfläche
- 47: Beschichtung
- 48: Decklage
- 49: Vakuumpumpe
- 50: Klappe
- 51: Formkranz
- 52: Mittelteil
- 53: Verstellantrieb
- 54: Formrahmen
- 55: Mittelteil
- 56: Seitenteil
- 57: Seitenteil
- 58: Verstellantrieb
- 59: Verstellantrieb
- 60: Distanz
- 61: Breite
- 62: Ausgangsbreite
- 63: Länge
- 64: Ausgangslänge
- 65: Ausgangshöhe
- 66: Höhe
- 67 68 69 70 71: Ausnehmung
- 72: Ausnehmung
- 73: Führungssäule
- 74: Verstellantrieb
- 75: Formeinsatz
- 76: Formeinsatz
- 77: Einstellantrieb
- 78: Einstellantrieb
- 79: Bereich
- 80: Bereich
- 81: Eindringtiefe
- 82: Eindringtiefe
- 83: Querschnittscheibe
- 84: Dicke
- 85: Querschnittscheibe

## Patentansprüche

1. Verfahren zur Herstellung eines Formteiles (2) aus Flocken (10,11) aus Kunststoffschaum (7, 8) und gegebenenfalls Füllmaterialien, insbesondere eines Recyclingkunst-stoffschaumes, bei dem Flocken (10, 11) aus Recyclingkunststoff mit einem flüssigen Rohmaterial (16, 17) eines Kunststoffes vermischt und oberflächlich beschichtet werden, worauf sie in eine Form (29) eingebracht und durch die Reaktion des Rohmaterials (16, 17) zu einer zusammenhängenden Zellstruktur verbunden und, gegebenenfalls nach einem Trocknungsvorgang, aus einem Formhohlraum (28) entnommen werden, wobei die Flocken (10, 11) aus Kunststoffschaum (7, 8) und/oder Füllmaterialien mit dem Rohmaterial (16, 17) vermischt sind, unter einem vorbestimmbaren Druck durch eine Einströmöffnung in einen allseitig verschlossenen und mit Lüftungsöffnungen (37) zum Abströmen eines gasförmigen Mediums in zumindest der der Einströmöffnung gegenüberliegenden Formfläche (34) versehenen Formhohlraum (28) eingeblasen und dieser mit den Flocken (10, 11) derart gefüllt wird, daß das durchschnittliche Raumgewicht eines Volumsteils mit vorbestimmtem Referenzvolumen in unterschiedlichen Querschnittscheiben (83, 85) des Formteils (2) durch das Eintragen der Flocken (10, 11) mit dem gasförmigen Medium in die Form (29) gleich hoch ist, worauf gegebenenfalls das Volumen des Formhohlraumes (28) nach dem Füllen mit den Flocken (10, 11) und/oder Füllmaterialien in Teilbereichen des Formhohlraumes (28) verringert wird, und wobei danach durch Zufuhr von Druck und/oder Temperatur und/oder einem Wasserdampf die Reaktion des Rohmaterials (16, 17) ausgelöst wird.

2. Verfahren nach Anspruch 1, **dadurch gekennzeichnet, daß** die aus einem Zwischenlagerbehälter (20) an eine Wiegevorrichtung (21) abgegebene Gemischmenge nur geringfügig zwischen 3 und 15 %, bevorzugt zwischen 5% und 10%, über der Menge liegt, die zur Herstellung des Formteiles (2) in die Form (29) einzufüllen ist und daß unter Kontrolle durch die Wiegevorrichtung (21) mit einer Fördervorrichtung (19) eine exakt dem Einfüllgewicht entsprechende Gemischmenge an eine Fördervorrichtung (24) weitergeleitet wird.

3. Verfahren nach Anspruch 1 oder 2, **dadurch gekennzeichnet, daß** ein Volumen des Formhohlraumes (28) für einen höher verdichteten Bereich (79, 80) eines Formelementes größer ist als für einen Bereich mit niederer Dichte.

4. Verfahren nach einem oder mehreren der vorhergehenden Ansprüche, **dadurch gekennzeichnet, daß** das Gemisch aus Flocken (10, 11) und Füllmaterialien über ein Fördergebläse (26) in den Formhohlraum (28) eingebracht wird.

5. Verfahren nach einem oder mehreren der vorhergehenden Ansprüche, **dadurch gekennzeichnet, daß** die aus Aufnahmebehältern (3, 4) entnommenen Flocken (10, 11) bzw. Füllmaterialien gegebenenfalls nach entsprechender Zerkleinerung einem Wiegebehälter (12) zugeführt werden und entsprechend dem gewünschten Mischungsverhältnis eine entsprechende Menge der unterschiedlichen Flokken (10,11) aus den Aufnahmebehältern (3, 4) entnommen wird, worauf dieses Gemisch aus Flocken (10, 11) und/oder Füllmaterialien einer Mischvorrichtung (15) zugeführt wird, in der es mit dem flüssigen und/oder pulverförmigen Rohmaterial (16, 17) aus einem Aufnahmekesseln (5) vermischt und danach eine insbesondere über eine Steuervorrichtung (14) vorbestimmbare Menge an Flocken (10, 11) und/oder Füllmaterialien dem Zwischenlagerbehälter (20) zugeführt wird, worauf die vordosierte Menge an Flocken (10, 11) und/oder Füllmaterialien mit der Fördervorrichtung (19) einem Auffangtrichter (25) bzw. einem Einlaß des Fördergebläses (26) zugeführt und mit diesem in den Formhohlraum (28) eingeblasen wird.

6. Verfahren nach einem oder mehreren der vorhergehenden Ansprüche, **dadurch gekennzeichnet, daß** das mit dem Fördergebläse (26) zum Transport der Flocken (10, 11) und/oder Füllmaterialien verwendete Gas, insbesondere Luft, über Lüftungsöffnungen (37) in Formflächen (33 bis 36 und 46) der Form (29) abgeführt wird.

7. Verfahren nach einem oder mehreren dervorhergehenden Ansprüche, **dadurch gekennzeichnet, daß** nach dem Füllen des Formhohlraumes (28) durch diese Lüftungsöffnungen (37) das Reaktionsmittel, insbesondere der Dampf, zum Aushärten des Rohmaterials (16, 17) zugeführt wird.

8. Verfahren nach einem oder mehreren der vorhergehenden Ansprüche, **dadurch gekennzeichnet, daß** vor dem Einbringen der Flocken (10, 11) bzw. des Füllmaterials in den Formhohlraum (28) im Bereich der Formflächen (33 bis 36 und 46) bzw. des Formhohlraumes .(28) Verstärkungselemente eingebracht und positioniert werden und daß nach dem Einbringen der Flocken (10, 11) bzw. Formteile (2), jedoch vor dem vollständigen Ausreagieren des Rohmaterials (16, 17), die Haltetelle der Verstärkungselemente aus dem Formhohlraum (28) entfernt werden.

9. Vorrichtung zur Durchfühung des Verfahrens gemäß einem der Ausprüche 1 bis 8 zur Herstellung eines Formteiles (2) mit mehreren Aufnahmebehältern (3, 4) für Teile oder Flocken (10, 11) aus Kunststoffschaum (7, 8) und gegebenenfalls Füllmaterialien, einer dem Aufnahmebehälter (3, 4) insbesondere nachgeordneten Zerkleinerungsvorrichtung (9) für die Teile bzw. Flocken, welcher ein Wiegebehälter (12) zugeordnet ist, dessen Auslaß in eine Mischvorrichtung (15) mündet, in die auch Leitungen von Aufnahmekesseln (5) für das Rohmaterial (16, 17) münden, wobei der Mischvorrichtung (15) ein Zwischenlagerbehälter (20) nachgeordnet ist, der mit einer Wiegevorrichtung (21) versehen ist und der über eine Fördervorrichtung (24), z.B. ein Fördergebläse oder einen Schneckenförderer mit einem Einlaß bzw. einem Auffangtrichter (25) eines Fördergebläses (26) verbunden ist, welches über eine bedarfsweise kuppelbare Zufuhrleitung mit dem allseitig verschloffenen Formhohlraum (28) verbunden ist, wobei Lüftungsöffnungen (37) zum Abströmen eines gasförmigen Mediums in zumindest der einer Einströmöffnung gegenüberliegenden Formfläche (34) des Formhohlraumes (28) abwechselnd mit der Umgebungsluft, einer Vakuumpumpe (49) oder einer Speiseleitung (40) für ein Reaktionsmittel, z.B. Dampf, insbesondere Trockendampf, mit Temperaturen zwischen 160°C bis 180°C, verbindbar sind und die Formflächen (33 bis 36 und 46) des Formhohlraumes (28) gegebenenfalls mehrteilig ausgebildet und/oder gegebenenfalls verstellbare Formeinsätze (75, 76) darin angeordnet sind.

10. Vorrichtung nach Anspruch 9, **dadurch gekennzeichnet, daß** die aus dem Zwischenlagerbehälter (20) in die Wiegevorrichtung (21) abgegebene Gemischmenge nur geringfügig, bevorzugt zwischen 5% und 10% über der Menge liegt, die in die Form (29) einzufüllen ist und daß die zur Wiegevorrichtung (21) gehörige Fördervorrichtung (19) solange die Gemischmenge an die Fördervorrichtung (24) übergibt, bis exakt das Einfüllgewicht erreicht ist, wobei dieser Vorgang durch die Wiegevorrichtung (21) überwacht ist.

11. Vorrichtung nach einem der Ansprüche 9 oder 10, **dadurch gekennzeichnet, daß** im Bereich der Formflächen (33 bis 36 und 46) der Form (29) in den Formhohlraum (28) verstellbare Halteteile für Verstärkungselemente angeordnet sind.

## Claims

1. Method of producing a moulding (2) made from floccules (10, 11) of plastic foam (7, 8) and optionally filler materials, in particular recycled plastic foam, whereby floccules (10, 11) of recycled plastic foam are mixed with a liquid raw material (16, 17) of plastic and surface-coated, after which they are introduced into a mould (29) and bonded to form a cohesive cellular structure due to the reaction of the raw material (16, 17) and removed from a mould cavity (28), if necessary after a drying process, whereby the floccules (10, 11) of plastic foam (7, 8) and/or filler materials are mixed with the raw material (16, 17) and blasted at a pre-definable pressure through an inlet orifice into a mould cavity (28) closed on all sides and provided with venting orifices (37) for releasing a gaseous medium in at least the mould surface (34) lying opposite the inlet orifice, and the cavity is filled with the floccules (10, 11) in such a way that the average relative density of a volume part with a prespecified reference volume is the same in different cross-sectional slices (83, 85) of the moulding (2) once the floccules (10, 11) have been introduced into the mould (29) with the gaseous medium, after which the volume of the mould cavity (28) is reduced in part-regions of the mould cavity (28) if necessary once it has been filled with the floccules (10, 11) and/or filler materials, and the reaction of the raw material (16, 17) is then initiated by introducing pressure and/or temperature and/or water vapour.

2. Method as claimed in claim 1, **characterised in that** the quantity of mixture dispensed from an intermediate storage container (20) to a weighing device (21) is only slightly higher, between 3 and 15 %, preferably between 5 % and 10 %, than the quantity with which the mould (29) is filled in order to produce the moulding (2) and a quantity of mixture corresponding exactly to the filling weight is conveyed by means of a conveying device (19) under the control of the weighing device (21) to a conveying device (24).

3. Method as claimed in claim 1 or 2, **characterised in that** a volume of the mould cavity (28) for a more densely compacted area (79, 80) of a moulded element is bigger than for an area with a lower density.

4. Method as claimed in one or more of the preceding claims, **characterised in that** the mixture of floccules (10, 11) and filler materials is introduced into the mould cavity (28) by means of a pneumatic conveyor (26).

5. Method as claimed in one or more of the preceding claims, **characterised in that** the floccules (10, 11) and filler materials, after being reduced to an appropriate size if necessary, are fed from storage containers (3, 4) to a weighing container (12) and, depending on the desired mixing ratio, a quantity of the different floccules (10, 11) is taken from the storage containers (3, 4) accordingly, after which this mixture of floccules (10, 11) and/or filler materials is fed to a mixing device (15) in which it is mixed with the liquid and/or powdered raw material (16, 17) from a storage tank (5), after which a quantity of floccules (10, 11) and or filler materials which can be specifically pre-defined by means of a control device (14) is fed to the intermediate storage container (20) and the pre-metered quantity of floccules (10, 11) and/or filler materials is then fed by means of the conveyor device (19) to a hopper (25) or to an inlet of the pneumatic conveyor (26) and blown by the latter into the mould cavity (28).

6. Method as claimed in one or more of the preceding claims, **characterised in that** the gas used by the pneumatic conveyor (26) to convey the floccules (10, 11) and/or filler materials, in particular air, is discharged via venting orifices (37) in mould surfaces (33 to 36 and 46) of the mould (29).

7. Method as claimed in one or more of the preceding claims, **characterised in that** after filling the mould cavity (28), the reactant, in particular steam, is introduced through these venting orifices (37) in order to cure the raw material (16, 17).

8. Method as claimed in one or more of the preceding claims, **characterised in that** before introducing the floccules (10, 11) and the filler material into the mould cavity (28), reinforcing elements are introduced and positioned in the region of the mould surfaces (33 to 36 and 46) and the mould cavity (28) and the retaining parts of the reinforcing elements are removed from the mould cavity (28) after the floccules (10, 11) or mouldings (2) have been introduced but before the raw material (16, 17) has completely reacted,.

9. Apparatus for implementing the method as claimed in one of claims 1 to 8 for producing a moulding (2) comprising several storage containers (3, 4) for parts or floccules (10, 11) of plastic foam (7, 8) and optionally filler materials, a size-reducing device (9) for the parts or floccules disposed in particular downstream of the storage container (3, 4) which co-operates with a weighing container (12), the outlet of which opens into a mixing device (15) into which pipes from storage tanks (5) for the raw material (16, 17) open, the mixing device (15) being disposed downstream of an intermediate storage container (20) which is provided with a weighing device (21) and connected by means of a conveyor device (24), e.g. a pneumatic conveyor or a screw conveyor, to an inlet or a hopper (25) of a pneumatic conveyor (26) connecting with a supply line which can be coupled as and when required with the mould cavity (28), the latter being closed on all sides, and venting orifices (37) for releasing a gaseous medium in at least the mould surface (34) of the mould cavity (28) lying opposite an inlet orifice can be alternately connected to the ambient air, a vacuum pump (49) or a supply line (40) for a reactant, e.g. steam, in particular dry steam, at temperatures of between 160°C and 180°C, and the mould surfaces (33 to 36 and 46) of the mould cavity (28) are optionally of a multi-part design and/or displaceable mould inserts (75, 76) are disposed therein.

10. Apparatus as claimed in claim 9, **characterised in that** the quantity of mixture dispensed from the intermediate storage container (20) to the weighing device (21) is only slightly, preferably between 5% and 10%, higher than the quantity with which the mould (29) is filled and the conveyor device (19) belonging to the weighing device (21) transfers the mixture quantity to the conveyor device (24) only until the exact filling weight is reached, this process being monitored by the weighing device (21).

11. Apparatus as claimed in one of claims 9 or 10, **characterised in that** retaining parts for reinforcing elements which are displaceable in the mould cavity (28) are provided in the region of the mould surfaces (33 to 36 and 46) of the mould (29).

## Revendications

1. Procédé de fabrication d'une pièce moulée (2) à partir de flocons (10, 11) en mousse de matière synthétique (7, 8) et le cas échéant de matières de remplissage, notamment d'une mousse de matière synthétique recyclée, où les flocons (10, 11) en matière synthétique de recyclage sont mélangés avec une matière brute liquide (16, 17) d'une matière synthétique et sont recouverts sur la surface, à la suite de quoi ils sont introduits dans un moule (29) et sont reliés par la réaction de la matière brute (16, 17) en une structure alvéolaire communiquante et sont retirés le cas échéant après une opération de séchage d'un espace creux de moule (28), où les flocons (10, 11) en mousse de matière synthétique (7, 8) et/ou les matières de remplissage sont mélangés avec la matière brute (16, 17), sont soufflés sous une pression prédéfinissable à travers une ouverture d'afflux dans un espace creux de moule (28) fermé de tout côté et pourvu d'ouvertures d'aération (37) pour l'écoulement d'un milieu gazeux dans au moins la face de moule (34) opposée à l'ouverture d'afflux, et celui-ci est rempli avec les flocons (10, 11) de telle sorte que le poids spécifique moyen d'une partie en volume, avec un volume de référence prédéterminé, est de la même grandeur dans des tranches de section transversale différentes (83, 85) de la pièce moulée (2) par l'insertion des flocons (10, 11) avec le milieu gazeux dans le moule (29), à la suite de quoi le cas échéant le volume de l'espace creux de moule (28) est diminué après le remplissage avec les flocons (10, 11) et/ou des matières de remplissage dans des zones partielles de l'espace creux de moule (28), et où ensuite, par l'amenée d'une pression et/ou d'une température et/ou d'une vapeur d'eau, la réaction de la matière brute (16, 17) est déclenchée.

2. Procédé selon la revendication 1, **caractérisé en ce que** la quantité de mélange distribuée d'un réservoir de stockage intermédiaire (20) à un dispositif de pesage (21) se situe seulement légèrement avec entre 3 et 15%, de préférence avec entre 5% et 10% au-dessus de la quantité qui doit être introduite dans le moule (29) pour fabriquer la pièce moulée (2) et que sous le contrôle du dispositif de pesage (21), au moyen d'un dispositif de convoyage (19), une quantité de mélange correspondant exactement au poids de remplissage est transférée à un dispositif de convoyage (24).

3. Procédé selon la revendication 1 ou 2, **caractérisé en ce qu'**un volume de l'espace creux de moule (28) pour une zone plus fortement compactée (79, 80) d'un élément moulé est plus grand que pour une zone de densité plus basse.

4. Procédé selon l'une ou plusieurs des revendications précédentes, **caractérisé en ce que** le mélange de flocons (10, 11) et de matières de remplissage est introduit par une soufflerie de convoyage (26) dans l'espace creux de moule (28).

5. Procédé selon l'une ou plusieurs des revendications précédentes, **caractérisé en ce que** les flocons (10, 11) respectivement matières de remplissage retirés des récipients récepteurs (3, 4) sont acheminés, le cas échéant après une fragmentation correspondante, à un récipient de pesage (12) et qu'on retire conformément au rapport de mélange à obtenir une quantité correspondante des flocons différents (10, 11) des récipients récepteurs (3, 4), où ensuite ce mélange de flocons (10, 11) et/ou de matières de remplissage est transféré à un dispositif de mélange (15) dans lequel il est mélangé avec la matière brute liquide et/ou pulvérulente (16, 17) d'une cuve de réception (5), et qu'ensuite une quantité de flocons (10, 11) et/ou de matières de remplissage prédéfinissable notamment par un dispositif de commande (14) est transférée au réservoir de stockage intermédiaire (20) à la suite de quoi la quantité dosée préalablement de flocons (10, 11) et/ou de matières de remplissage est acheminée par le dispositif de convoyage (19) à une trémie réceptrice (25) respectivement à une entrée de la soufflerie de convoyage (26) et est soufflée avec celle-ci dans l'espace creux de moule (28).

6. Procédé selon l'une ou plusieurs des revendications précédentes, **caractérisé en ce que** le gaz, notamment l'air, utilisé avec la soufflerie de convoyage (26) pour le transport des flocons (10, 11) et/ou des matières de remplissage est évacué par des ouvertures d'aération (37) dans des faces de moule (33 à 36 et 46) du moule (29).

7. Procédé selon l'une ou plusieurs des revendications précédentes, **caractérisé en ce qu'**après le remplissage de l'espace creux de moule (28), on achemine à travers ces ouvertures d'aération (37) le produit de réaction, notamment la vapeur, pour le durcissement de la matière brute (16, 17).

8. Procédé selon l'une ou plusieurs des revendications précédentes, **caractérisé en ce qu'**avant l'introduction des flocons (10, 11) respectivement de la matière de remplissage dans l'espace creux de moule (28), des éléments de renforcement sont introduits et positionnés au voisinage des faces de moule (33 à 36 et 46) respectivement de l'espace creux de moule (28) et **en ce qu'**après l'introduction des flocons (10, 11) respectivement de pièces moulées (2), cependant avant la réaction complète de la matière brute (16, 17), les parties de retenue des éléments de renforcement sont retirées de l'espace creux de moule (28).

9. Dispositif pour la mise en oeuvre du procédé selon l'une des revendications 1 à 8 pour la fabrication d'une pièce moulée (2) avec plusieurs réservoirs de réception (34) pour les parties ou flocons (10, 11) en mousse de matière synthétique (7, 8) et le cas échéant de matières de remplissage, un dispositif de fragmentation (9) pour les parties ou flocons disposé notamment en aval du réservoir de réception (3, 4) auquel est associé un récipient de pesage (12) dont la sortie débouche dans un dispositif de mélange (15) dans lequel débouchent également des conduits de cuves de réception (5) pour la matière brute (16, 17), où il est disposé en aval du dispositif de mélange (15) un réservoir de stockage intermédiaire (20) équipé d'un dispositif de pesage (21), et qui est relié par un dispositif de convoyage (24), par exemple une soufflerie de convoyage ou un convoyeur à vis à une entrée respectivement une trémie de réception (25) d'une soufflerie de convoyage (26), qui est reliée par un conduit d'amenée pouvant être accouplé le cas échéant à l'espace creux de moule (28) fermé de tout côté, où des ouvertures d'aération (37) pour l'évacuation d'un milieu gazeux dans au moins la face de moule (34) de l'espace creux de moule (28) opposée à l'ouverture d'afflux peuvent être reliées alternativement à l'air ambiant, une pompe à vide (49) ou un conduit d'alimentation (40) pour un produit de réaction, par exemple la vapeur, notamment la vapeur sèche, à des températures entre 160°C jusqu'à 180°C, et que les faces de moule (33 à 36 et 46) de l'espace creux de moule (28) sont réalisées le cas échéant en plusieurs parties et/ou que des inserts de moule, le cas échéant déplaçables (75, 76) sont disposés dans celui-ci.

10. Dispositif selon la revendication 9, **caractérisé en ce que** la quantité de mélange émise par le réservoir de stockage intermédiaire (20) dans le dispositif de pesage (21) est seulement légèrement, de préférence entre 5% et 10%, supérieure à la quantité qui doit être introduite dans le moule (29), et que le dispositif de convoyage (19) associé au dispositif de pesage (21) transfère aussi longtemps la quantité de mélange au dispositif de convoyage (24) jusqu'à ce que le poids de remplissage exact soit atteint, cette opération étant surveillée par le dispositif de pesage (21).

11. Dispositif selon l'une ou plusieurs des revendications 9 ou 10, **caractérisé en ce que** sont disposées au voisinage des faces de moule (33 à 36 et 46) du moule (29) des parties de retenue déplaçables dans l'espace creux de moule (28) pour des éléments de renforcement.
